# EUROPEAN PATENT APPLICATION

(11) **EP 3 188 037 A1**
(43) Date of publication of application: **05.07.2017**
(21) Application number: 15307187.3
(22) Date of filing: 31.12.2015
(51) Int. Cl.: G06F 17/30

(54) **METHOD AND DEVICE FOR MANAGING PERSONAL MEDIA ITEMS**

(71) Applicant: Thomson Licensing, 92130 Issy-les-Moulineaux (FR)
(72) Inventor: BISWAS, Debmalya, 1018 Lausanne (CH); LAWRENSON, Matthew, 1030 BUSSIGNY (CH)
(74) Representative: Huchet, Anne

(57) **Abstract**

Media items having contents embodying objects are stored in one or more media databases (21) upon instructions of a user (1), accessible by that user and only accessible by other users under the control of that user. An appraisal indicator associated with one of the objects is representative of an appreciation by the user on that object. If the appraisal indicator meets a deletion criterion, object deletion instructions related to that object are triggered for deleting at least part of one or more of the media items having that object present in their content.

The deletion can include media item deletion, or removal of the object in the concerned media item.

Applications to storage management.

## Description

### 1. Technical field

The invention relates to the domain of personal media management, and more particularly to related storage management.

### 2. Background art

The technological evolutions have made possible the recording of large quantities of personal data over time, whether stored at home or in shared storage spaces. The latter include notably large-scale network storage servers, such as practiced by social networks or with cloud computing.

Such possibilities are exploited in particular for keeping personal memories, in the form of pictures, movies, music, or any other video, audio or audio/visual supports. In fact, many people tend to keep track of a significant amount of their life events, which can extend to "lifelogging", through which users capture large parts of their lives by wearable monitors and computers.

As a result, an increasingly impressive volume of personal data aggregated over years is stored in multiple databases, and accessible through various networks, notably via the Internet. This entails huge growing needs in storage resources and processing.

In patent document US 2003/0117651 to Eastman Kodak Comp. (inventors T. Matraszek et al.), a method is proposed for classifying images in an album based upon affective information related to a user's emotional reaction to the images. In this respect, such affective information is either manually entered or automatically collected at different time periods. That collecting can rely notably on the user's exploitation of a given image, e.g. number of printings or of emailing thereof, or on the user's physiological reaction to that image, e.g. facial expression, body gestures, eye movements, etc.

Though the solutions developed in that document may prove helpful in the management of stored personal images, they do not solve the issue of the high amount of recorded data. They even add an additional recording layer, corresponding to the personalized affective information. Also, for sake of efficiency, they require a regularly updated assessment of the user's reaction to all images, which is demanding to the user's system as well as to bandwidth transfers over time.

In patent document US 2013/0038756A1 to Samsung Electronics Co. (inventor: D. Cheng), a method is proposed for creating a grouping of captured contents termed "facets", such as pictures, videos or voice recordings. Such a grouping with an organized structure, termed "story", can be automatically composed based on a user's emotions or sentiments towards the facets. Those emotions/sentiments can be tracked from sensor data and recorded while capturing the facets, e.g. from physiological sensors or related user's actions or situations. Also, a facet may be attached to a physical object by obtaining an object identification, e.g. from a bar code scanning or via image recognition, for sake of easy search and retrieval.

The solutions disclosed in that document, though enabling efficient story building based on media items, involve additional storage that may be significant for a high quantity of media data. Automatically discarding the original facets after having edited a story, as optionally proposed in the document, provides significant memory gain, but at the cost of a loss of the original media data. Also, the evolutions of the user's sentiments over time are not addressed.

Overall, a skilled person lacks efficient and reliable solutions for automatically managing a large amount of personal media items over time without incurring prejudicial data losses, while avoiding an uncontrolled increase in the related storage size.

### 3. Summary

The purpose of the present disclosure is to overcome the disadvantages of the prior art, by offering a potentially efficient solution for providing users with automatic database management of personal media items.

An object of the disclosure is notably a solution that, in illustrative embodiments, can enable to reduce significantly the storage space requirements over time, even in case of an abundance of recorded personal media items, while exposing the users to a low risk (if any) of losing cherished memories.

At a collective scale involving multiple users, the solution of the present disclosure can possibly offer a quite efficient global storage management of personal media items accessible via a network such as notably the Internet, enabling to reduce substantially the needs for storage resources.

In this respect, the present disclosure relates to a method of managing media items having respective media contents embodying at least two objects, those media items being stored in one or more media databases upon instructions of at least one user, being accessible by that/those user(s) and only being accessible by other users under the control of that/those user(s).

According to the present disclosure, the method comprises:
- receiving in at least one processor one or more appraisal indicator(s) associated with one or more of the objects, called a target object, that/those appraisal indicator(s) being representative of an appreciation by the user(s) on the target object(s);
- if the appraisal indicator(s) meets one or more deletion criteria, triggering, by the processor(s), object deletion instructions related to that/those target object(s), for deleting at least part of one or more of the media items, called a target media item, having that/those target object(s) present in the content of that/those media item(s).

By contrast with the known solutions, the method of the disclosure can rely on cross-deletion over the media items, based on the user's appreciations, such as notably feelings or emotions, towards given objects present in the media items.

This can provide a very efficient global database management, potentially updated regularly over time without any significant involvement by the user. Also, in network shared databases such as e.g. within social networks, this can possibly offer large scale storage savings without jeopardizing memories that really matter to users.

In fact, it appears that a number of kept personal memories prove irrelevant over time. This can be due to various reasons, among which the change in affective importance attached to e.g. people, pets, places or music. This can also be caused by painful events, such as a divorce or a death. Accordingly, in illustrative implementations, media catalogues can be easily maintained and limited in storage needs with respect to users' evolving relationships, irrespective of the size of the catalogues, and without the needs for the users to formally describe the changes in relationship status.

A resulting further potential advantage of the disclosed method is the possibility to avoid embarrassing or distressing circumstances, e.g. due to undesired photographs showing a user with a former boyfriend or girlfriend, or due to documents associating in a no longer wished way a user with a given brand on a social network profile.

In particular implementations, the method comprises:
- sending the deletion instructions to a server via a communication network; and/or
- deleting by at least one media editor the at least part of one or more of the target media item(s).

In a first execution mode, the object deletion instructions comprise deleting at least one of the target media item(s).

In a second execution mode, possibly combined with the first execution mode, the object deletion instructions comprise removing the target object(s) in at least one of the target media item(s) associated with that/those target object(s).

In that second mode, at least one of the following implementations is advantageously applied:
- the object deletion instructions comprise replacing the removed target object(s) with another of the objects in at least one of the target media item(s);
- the object deletion instructions comprise replacing the removed target object(s) with replacement content in at least one considered media item among the target media item(s), that replacement content being derived from a part complementary to the target object(s) in the content of that/those considered media item(s).

Preferably, the appraisal indicator(s) include(s) one or more scores and the one or more deletion criteria rely on at least one score threshold corresponding to that/those score(s).

In an advantageous implementation, the method comprises:
- deriving at least one of the appraisal indicator(s) from monitored physiological reactions of the user(s) towards at least one of the objects.

In addition, the present disclosure concerns a computer program for managing media items, that computer program comprising software code adapted to perform steps of a method of managing media items in accordance with the present disclosure.

The present disclosure further pertains to a non-transitory program storage device, readable by a computer, tangibly embodying a program of instructions executable by the computer to perform a method of managing media items compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM (Read-Only Memory), an EPROM (Erasable Programmable ROM) or a Flash memory, a portable CD-ROM (Compact-Disc ROM).

Another object of the present disclosure is a device for managing media items having respective media contents embodying at least two objects, those media items being stored in one or more media database(s) upon instructions of one or more user(s), being accessible by that/those user(s) and only being accessible by other users under the control of that/those user(s). In particular implementations, the device includes:
- at least one network transmitter configured for sending the deletion instructions to a server via a communication network; and/or
- at least one media editor configured for deleting the at least part of one or more of the target media item(s).

According to the present disclosure, the device includes at least one processor configured for:
- receiving at least one appraisal indicator associated with at least one of those objects, called a target object, that/those appraisal indicator(s) being representative of an appreciation by the user(s) on that/those target object(s);
- if the appraisal indicator(s) meets at least one deletion criterion, triggering object deletion instructions related to that/those target object(s), for deleting at least part of at least one of the media items, called a target media item, having that/those target object(s) present in the content of that/those media item(s).

In a first embodiment, the object deletion instructions comprise deleting at least one of the target media items.

In a second embodiment, possibly combined with the first embodiment, the object deletion instructions comprise removing the target object(s) in at least one of the target media item(s) associated with that/those target object(s).

In that second embodiment, at least one of the following implementations is then advantageously applied:
- the object deletion instructions comprise replacing the removed target object(s) with another of the objects in at least one of the target media item(s);
- the object deletion instructions comprise replacing the removed target object(s) with replacement content in at least one considered media item among the target media item(s), that replacement content being derived from a part complementary to the target object(s) in the content of that/those considered media item(s).

Preferably, the appraisal indicator(s) include(s) one or more scores and the one or more deletion criteria rely on at least one score threshold corresponding to that/those score(s).

In an advantageous implementation, the processor(s) is/are further configured for:
- deriving at least one of the appraisal indicator(s) from monitored physiological reactions of the user(s) towards one or more of the objects.

### 4. List of figures

The present disclosure will be better understood, and other specific features and advantages will emerge upon reading the following description of particular and non-restrictive illustrative embodiments, the description making reference to the annexed drawings wherein:
- figure 1 is a block diagram representing schematically a system for managing media items, that system comprising a device compliant with the present disclosure;
- figure 2 represents the associations between media items and objects embodied in their contents, those media items being managed with the system of figure 1;
- figure 3 is a flow chart showing steps executed by the system of figure 1, in managing the media items of figure 2;
- figure 4 is a flow chart detailing one of the steps of figure 3, executed in assessing an appreciation by a user on one of the objects of figure 2;
- figure 5 represents schematically a particular embodiment of the system of figure 1, relying on a partially local management of personal media items in a personal device and a remote storage management of those media items;
- figure 6 diagrammatically shows a particular processing apparatus comprising the device represented on figure 5;
- figure 7 represents schematically another particular embodiment of the system of figure 1, relying on a limited local management of personal media items in a personal device and a mainly remote management of those media items;
- figure 8 represents schematically a further particular embodiment of the system of figure 1, relying on a full local management of personal media items.

On the figures, same references are used in different embodiments for identifying similar entities.

### 5. Detailed description of embodiments

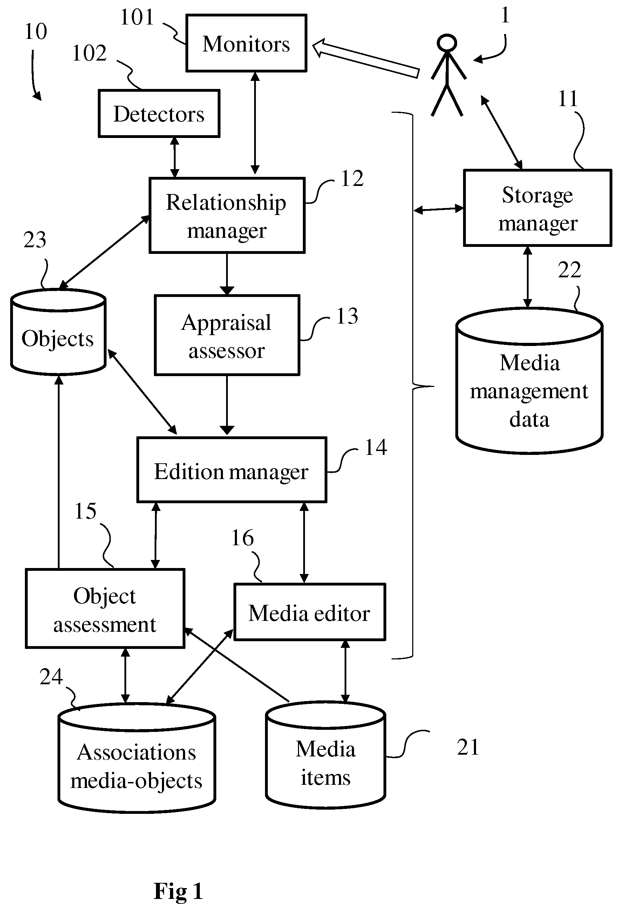

The present disclosure will be described in reference to a particular functional embodiment of a system 10 for managing media items, as functionally illustrated on **Figure 1****.**

That system 10 is presented as adapted to the managing of "personal" media items, in the sense that the recording of media items in one or several databases 21 is controlled by one or several users 1. Namely, those media items are:
- stored in the database(s) 21 upon instructions of the user(s) 1;
- accessible by the user(s) 1;
- only accessible by other users than the user(s) 1 under the control of the user(s) 1.

The term "access" refers to reading, writing and editing operations, such access being possibly direct, or indirect via an operator. The term "users" means any persons having potentially some personal interest in accessing contents of the database(s) 21, apart from people acting in the frame of database management functions. In this respect, this does not cover operators intervening e.g. for technical checks or repairs, media arrangements or collective storage processing.

The feature related to the restrained accesses by other users than the controlling user(s) 1 expresses that the controlling user(s) 1 is/are fully taking the decisions on whether and who among the other users can access the controlling user's personal media items, and to which extent. The authorized other users may notably be none, e.g. if the media items are stored locally and the user(s) 1 does not intend to share the access with anybody else. By contrast, the user(s) 1 may give a broad shared reading access to other users, e.g. within a social network, those other users being possibly targeted, e.g. consisting in a given circle of friends. Such access authorizations can possibly be given over any time period and disabled by the user(s) 1 as desired.

In any event, the user(s) 1 keep(s) control over the accesses by other users over time.

In what follows, the system 10 is described in relation with a unique user 1 for given media items. Several users controlling a given set of media items can however alternatively be considered, those users being e.g. part of a family, a group of friends, or a company staff. The term "personal" remains relevant then, since the system 10 is connected with individual people forming the concerned group of persons, subject to a consideration of mixed personal inputs.

The media items can consist in any items for storage of personal information or memories, including notably photographs, videos, image renderings (e.g. 3D models), audio recordings, messages, texts, recordings of environmental data such as e.g. temperature or smell, 3D structures, or any combination thereof.

The system 10 comprises several functional blocks or modules, which can be implemented in various ways together or separately in local or remote apparatus as will be exemplified below.

Those modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor.

Likewise, the system 10 comprises several databases, which can be stored locally or remotely, and can be distributed respectively in physically distinct storage places or devices, combined in any way in same storage places or devices, or themselves shared in several parts that are distributed in two or more storage places or devices.

Locally, such storage devices can notably include internal memory resources, e.g. based on RAM (Random Access Memory), ROM or EEPROM (Electrically-Erasable Programmable ROM) capacities. They can alternatively include external memories, e.g. Flash memories, SSD (Solid-State Drive), a CD (compact diskette), an optical disc such as, for example, a DVD (Digital Versatile Disc), or an HDD (Hard Disk Drive). The storage can also combine internal and external resources.

Remotely, the storage devices can notably take the form of online or nearline storage, cloud storage, or any kinds of tertiary mass storage, including network-attached storage.

In particular, the media database 21 can e.g. be a local photo catalogue on a user's personal computer, a cloud based photo repository or a cloud based storage held within a social network.

The user 1 is notably interacting with a storage manager module 11, configured for enabling the storage management of the user's personal media items in the database 21, in particular by means of media management data available in a database 22.

The terms "configured" and "adapted" are used in the present disclosure as broadly encompassing initial configuration, later adaptation or complementation, or any combination thereof alike, whether effected through hardware or software (including firmware).

The system 10 also comprises an object assessment module 15, configured for assessing two or more "objects" embodied in the contents of the stored media items. Such an object can consist in any entity making possible its identification in distinct media items. It can notably be materialized in media contents through visual, audio, olfactory or structural shape features, or any combination thereof. Also, it can correspond e.g. to a person, an animal such as a pet, a location, a song, an environmental condition such as weather or lighting related, a flagrance, a material thing, a slogan, a brand, a name, a texture or a shape, a location, or any combination thereof.

It will be apparent that a given object can be present in any number of the media items, while a given media item can correspond to one or more of the objects, or to none.

For sake of convenience and brevity, the term "object" refers both to the abstract sense of what the object is referring to (e.g. a person) and to the media materialization of that abstraction, which is taking shape as part of a media content.

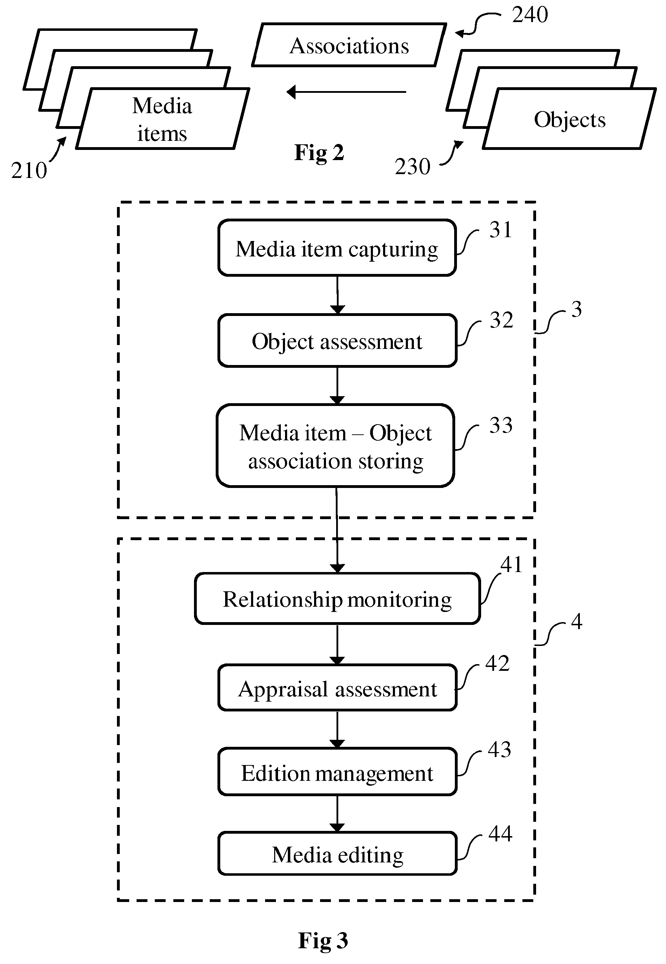

The data about the objects are stored in a database 23, while associations between the media items of database 21 and the objects of database 23 are stored in a database 24. As visible on **Figure 2****,** those associations 240 establish links between the media items 210 and the objects 230. The associations 240 can be kept in any form, and notably as pointers from the objects 230 to the media items 210, pointers from the media items 210 to the objects 230, one or more dedicated lookup tables, or metadata (such as notably identifiers) attached to the media items 210 or to the objects 230. As mentioned above, the databases 21, 23 and 24 are not necessarily separated and can be combined in any manner appropriate to specific implementations.

The object assessment module 15 establishes the associations 240 between the media items 210 and the objects 230. In advantageous implementations, it is configured to proceed with automatic object recognition in the media items 21 themselves, e.g. through face recognition algorithms adapted to detect the presence of certain persons, or acoustic comparison adapted to detect the presence of certain songs.

In other advantageous implementations, it is configured to exploit data obtained at the same time as the media captures, e.g. through sensors used to gather environmental lighting or weather conditions, smells, or positions (which can be obtained with a navigation system such as notably GPS - for Global Positioning System - or Galileo). The environmental conditions, smells and positions are then respectively constituting at least some of the considered objects.

In still other implementations, the associations are entered by a person (manually or by voice recognition), who is preferably the user 1. Though requiring human intervention, that approach reduces the computational or sensing needs.

In a particular mode, the object assessment module 15 is adapted to automatically find new objects 230, which are then added into the object database 23. In another mode, the user 1 is entering directly the new objects 230.

In particular embodiments, the object assessment module 15 is determining and recording the associations 240 as soon as the media items are captured. In other embodiments, the associations 240 are determined later, either regularly e.g. on a periodic basis, or just when needed, notably in executing deletion steps of the present disclosure as hereinafter developed.

The various implementations above of the object assessment module 15 can be combined in any way.

The system 10 also comprises one or more monitors 101 (see Fig. 1), configured for monitoring actions or reactions by the user 1. In advantageous embodiments, those monitors 101 include one or more processing units (i.e. modules or processors) adapted to analyze electronic transactions or messages from the user 1, e.g. emails, social network posts or online interactions with Internet sites. Those processing units are configured for assessing related sentiments or emotions of the user 1, which can be based e.g. on the identification of dedicated words in the messages or on specific sentence structures derived from parsing.

In other embodiments, advantageously combined with the previous ones in ascertaining the obtained information, the monitors 101 include one or more physiological sensors, preferably embodied in wearable devices. Such sensors can be in contact with the user 1, and for example include EEG sensors (for electroencephalography) mounted on a person's scalp, which may rely on brain-computer interfaces available on the consumer market. They can further or instead include EMG (for electromyography), EKG (for electrocardiography) and/or GSR (for galvanic skin response) apparatus, and/or inertial sensors.

In other implementations, the sensors are not in direct contact with the user 1, and can for example include image sensors monitoring the user's pupils with sufficient capability for ascertaining changes in the pupil's diameter. Other possible implementations include video cameras monitoring the user's posture. Both remote and contact devices can also be used jointly in the sensors.

In addition, one or more detectors 102 are in charge of monitoring object-related factors corresponding to the actions or reactions of the user 1. The nature of the detectors 102 depends fully on the nature of the considered objects 230 and is directed to identifying those objects 230. For example, if the considered object is a person, the detectors 102 can include a voice detection or a face recognition system (physical presence of the person, videoconference, telephone call, etc.), or a processing unit extracting email addresses (electronic communications).

As will be apparent to the reader, the object assessment module 15, monitors 101 and/or detectors 102 can in fact be at least partly combined or embodied in one or more same apparatus.

The system 10 further comprises a relationship manager module 12, which is configured for assessing sentiments or emotions of the user 1 from activity monitoring and for ascertaining information on relationships between the user 1 and the considered objects 230.

Activity monitoring can include e.g. the monitoring of interpersonal interactions through hand gestures, gaze, unfriendly conversation tone, social network posts, etc.

In particular, the manager module 12 is configured for assessing feelings of the user 1 from biometric data obtained with the monitors 101. Related technologies are known to persons skilled in the art, and disclosed e.g. in the articles "Motion Magnification of Facial Micro-expressions" (http://runpeng.mit.edu/projects/microexpression.pdf) to Gogia and Liu, MIT, Dec. 8, 2014 and "DEAP: A Database for Emotion Analysis using Physiological Signals" to S. Koelstra et al., Affective Computing, IEEE Transactions on, Vol. 3, Issue 1, June 9, 2011.

For example, activity monitoring can cover:
- a handshake, detected via inertial sensors on a smartwatch;
- a friendly conversation, as detected via a combination of facial recognition, gaze data and acoustic analysis;
- a disapproval, as detected via an analysis of a person's facial gestures;
- a dislike on certain weather conditions or locations, as detected by environmental/location sensors and analysis of social network posts.

The module 12 is further adapted to process inputs from the detectors 102 with regard to the concerned objects 230, and to induce therefrom appropriate relationships between the objects 230 and the user's feelings.

The obtained relationships are exploited by an appraisal assessor module 13 assessing an appreciation by the user 1 on the considered object 230. That appreciation can amount e.g. to a social relationship status of the user 1 with other persons.

That appreciation can then possibly lead to edition actions controlled by an edition manager 14 and executed by a media editor 16 on the media items 210 contained in the media database 21 and associated with the concerned object 230. Those edition actions, when activated, include deleting all or part of the determined media items 210, as detailed below.

Preferably, the relationship manager 12 is configured for a training stage, during which the data provided by the monitors 101 and detectors 102 are correlated with manually entered data regarding the user's emotions and/or the related objects, e.g. in response to questionnaires.

Data exploited in the previous steps, including those related to emotion assessment, object identification, appraisal assessment and determination of related actions, are stored in the databases 22 and 23 as appropriate.

The operations executed by a particular embodiment of the system 10, as shown on **Figure 3****,** comprise mainly an upstream stage 3 concerning the acquisition of new media, and a downstream stage 4 concerning current processing of the recorded media items 210.

It should be noted that the upstream stage 3 is in fact preferably repeated over time, included during the processing of recorded media and afterwards. The terms "upstream" and "downstream" refer therefore here merely to the processing of specific media items 210, recorded at a given point of time. Namely, the stage 4 is itself upstream with respect to later further and/or completed media captures.

The media acquisition stage 3 includes:
- at step 31, capturing one or more media items 210;
- at step 32, assessing one or more related objects 230 by the object assessment module 15;
- at step 33, recording one or more associations 240 between the concerned media items 210 and objects 230 into the association database 24 by the object assessment module 15.

The media processing stage 4 includes:
- at step 41, monitoring a relationship between the user 1 and one or more objects 230, by the monitors 101, detectors 102 and relationship manager 12;
- at step 42, assessing an appreciation by the user 1 about the considered object 230, by the appraisal assessor 13;
- at step 43, taking appropriate edition management decisions regarding the media items 210 associated with the concerned object 230, by the edition manager 14;
- at step 44, editing the concerned media items 210 in the media database 21, by the media editor 16.

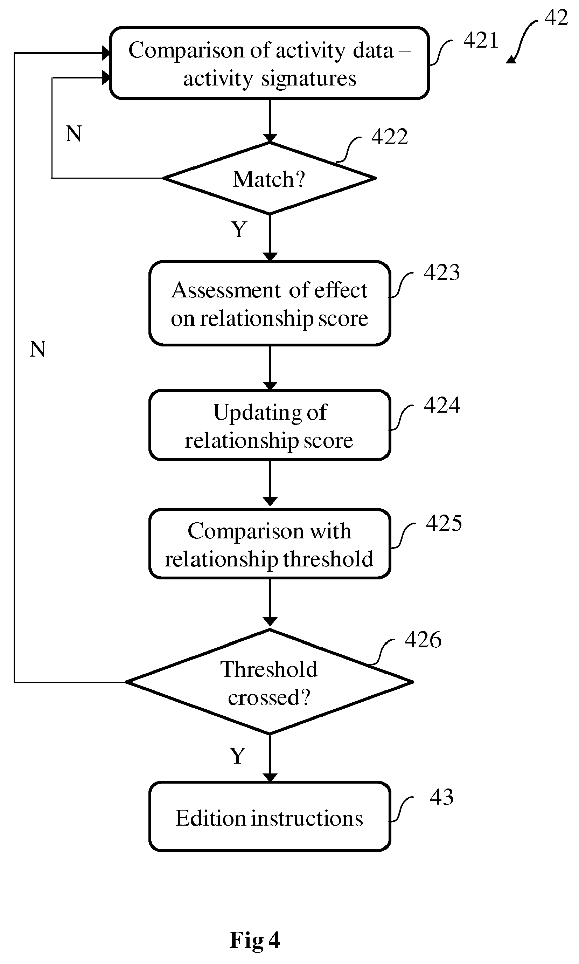

The activities by the appraisal assessor 13 at the appraisal assessment step 42 will now be detailed in a particular execution mode, in relation with **Figure 4****.**

In what follows, "activity data" designate the user's actions or reactions as stated by the relationship manager 12 in terms of sentiments or emotions, while "activity signatures" designate related reference data stored in database 22. The comparison between the activity data and the activity signatures enables to identify a significant expression of positive or negative appreciation by user 1 towards a given object 230.

Such an activity signature can consist e.g. in an identified handshake or friendly conversation (positive appreciation), or in a disapproval glance or a verbal or written comment indicating disapproval (negative appreciation).

Also, a relationship score is managed for each object 230 in relation with the user's appreciation on that object 230, and recorded in the object database 23.

In assessing the appraisal by user 1:
- at step 421, the activity data are compared with the activity signatures;
- at step 422, if a match is ascertained between the activity data and the activity signatures, the effect of that match on the relationship score for the concerned object 230 is assessed, at step 423; otherwise, the system 10 turns to another comparison when available; several comparisons can also be processed in parallel;
- if a match has been ascertained at step 422 and the effect has been assessed at step 423, that effect is exploited at step 424 for updating the relationship score corresponding to the concerned object 230; for example, a handshake increases the relationship score for the corresponding object 230 by 1;
- at step 425, the updated relationship score is compared with a relationship threshold associated with the concerned object 230, or associated with a set of objects (the threshold being possibly the same for all objects 230);
- at step 426, if the threshold is crossed, appropriate edition instructions are triggered at step 43 (see Fig. 3); otherwise, the system 10 turns to another comparison when available; the appropriate instructions are derived from a set of rules recorded in database 22, e.g. in the form of a lookup table containing a set of prescribed threshold relationship scores and associated actions.

In alternative implementations, another indicator is used instead of the relationship score. In a special case, that indicator consists merely in a binary value that stands for "all or nothing".

Preferably, any deletion is submitted to the user 1 for a decision, so that the user 1 keeps control over the management of the personal media items 210.

More details are provided below on the deletion instructions. In a particular implementation, the deletion instructions concern the whole media items 210 associated with the concerned object 230. This means that a global clean-up of the database 21 is performed, reducing the storage in a potentially significant way.

In another implementation, the media items are kept, but modified by deleting parts of their contents corresponding to the concerned object 230. Notably, a particular song can be deleted from an audio recording, or a specific slogan from text files, or a given person or animal from photographs.

In the present disclosure, the term "remove" as applied to a media item is used in a more precise sense than "delete", and means deleting part(s) of that media item. By contrast, the term "delete" encompasses taking away a media item from a media database, as well as removing part of that media item while leaving the latter in a resulting modified form in the media database.

More precisely, removing a given object from an image can rely on processes known to persons skilled in the art. Related techniques are disclosed e.g. in the articles "Finding Distractors In Images" by O. Fried, E. Shechtman, D. Goldman and A. Finkelstein, delivered at the 2015 Computer Vision and Pattern Recognition Conference in Boston (available online at: http://gfx.cs.princeton.edu/pubs/Fried 2015 FDI/fried2015distractors.pdf); and "A computational Approach for Obstruction-Free Photography" by T. Xue, M. Rubinstein, C. Liu and W. Freeman, presented as a technical paper during the 42nd International Conference and Exhibition on Computer Graphics and Interactive Techniques (SIGGRAPH 2015, available online at: http://gfx.cs.princeton.edu/pubs/Fried 2015 FDI/fried2015distractors.pdf).

The deleted parts of the images, pictures or videos are then advantageously inpainted with surrounding contents, or filled in by propagating information from other parts of the image or from other frames in the sequence; alternatively, those deleted parts are removed by image retargeting using e.g. seam carving. Such methods are known to skilled persons and described for example in the articles by Fried et al. and Xue et al. cited above, which further provide a number of related technical sources.

Interestingly, the deletion methods above usually provide statistically a gain in memory size, due to a reduction of the quantity of information associated with each image.

The media deletion implementations can be combined in any way. According to several particular execution modes:
- the processing of the media is scheduled, e.g. at timed intervals (which could be notably every day, every week, etc.);
- a processing job is run when a relationship changes - notably when a threshold is crossed; this mode can reduce media edition overhead at a playing time;
- a processing job is run on the fly, as the media database 21 is accessed.

It deserves being noted that even though according to the present disclosure, dedicated storage is required for the objects 230 and associations 240, this is usually expected to be largely outweighed by the gains brought by the decrease in the storage needs for the media items 210. Also, since the assessments and deletions can be made on a regular basis, a size control mechanism can be made available.

In a particular implementation, the proposed or executed deletion is extended beyond the media items 210 containing the considered object 230. The deletion then encompasses media items 210 associated with one or more other objects which are closely related to the considered one. Indeed, a deterioration of the relationship between the user 1 and the considered object leads to inducing a similar deterioration of the relationship between the user 1 and the other objects, e.g. because the objects, which can notably be people, are closely related.

In another implementation, an object 230 removed from media items 210 is replaced with another object, based on a suitability of the relationship status of the user 1 with that other object, and possibly on the context of the media content. Though it may then be difficult to provide related storage gains, that solution may have attractive limited applications in particular cases, so that the global decrease in memory needs remains quite significant. For example, a song that has become unpleasant to the user 1 may be replaced by a preferred one in personal movies, a slogan that looks outdated to the user 1 may leave room to an appreciated one, or a depreciated background representation in personal communication documents may turn to a quite preferred one.

Preferably, then, the appraisal indicators such as the relationship scores are also used for identifying favorite objects.

A relationship status is advantageously exploited together with a relationship score for each object 230, the relationship status being changed upon a threshold cross. For example the status is switched from "positive" to "negative" or conversely.

In a further mode, areas of a picture or video corresponding to the concerned object 230 are pixelated - instead of being removed. Though not providing as such a gain in memory space, that edition operation can be a useful intermediary step before deletion, enabling the user 1 to be aware of the expected media edition results before their achievement. In this way, the user 1 can take better-informed decisions in accepting or not the automatic deletion actions.

In another advantageous mode, the deletion operations applied to media items 210 for one object 230 are triggered only in specific expressions or contexts, having particular attributes. For example, they are applied only to a determined time period of media captures, which can be old or recent, or only to the media items 210 especially tagged upstream as authorized for automatic deletion or transformation.

In a variant implementation, the edition operations are depending on a determined object type or media type. For example, objects are categorized as persons, animals, places, music, etc.; and pictures are categorized as business group shots, selfies with another person, etc. A specific set of rules is then associated with each of those object types and/or media types.

For example, a formerly familiar object can be removed from the background of a selfie, but not from other kinds of pictures; or a song can be replaced with another song in a movie, but not persons or places; or videos featuring a given person can be deleted, but not photographs; or two distinct relationship status are considered and associated with respective score thresholds, the videos being deleted when the score corresponding to the given person is below a first of those thresholds and the photographs being deleted when the score is below a second threshold lower than the first threshold.

In a variant embodiment, a group of several users is considered instead of the single user 1. Then, advantageously, the system 10 exploits a user identifier and keeps track of each user separately as previously developed.

In another embodiment, the media items 210 stored in database 21 belong to a group of users, and all users of the group are considered together for assessing their appreciations on the objects 230. Accordingly, the storage management of the media items 210 reflects the collective view of the group on the related objects 230.

In a variant embodiment, the users of the group are identified and considered in the computation of the relationship score or other appraisal indicator. In this way, the contributions by the users do not depend merely on their number of identified actions, but each of them can be fully taken into account. This can take the form of a mere average over the users, or of weighted parameters corresponding to the respective users of the group.

Particular implementation examples of the system 10 will now be described. They involve a variable degree of remote operations compared with local operations.

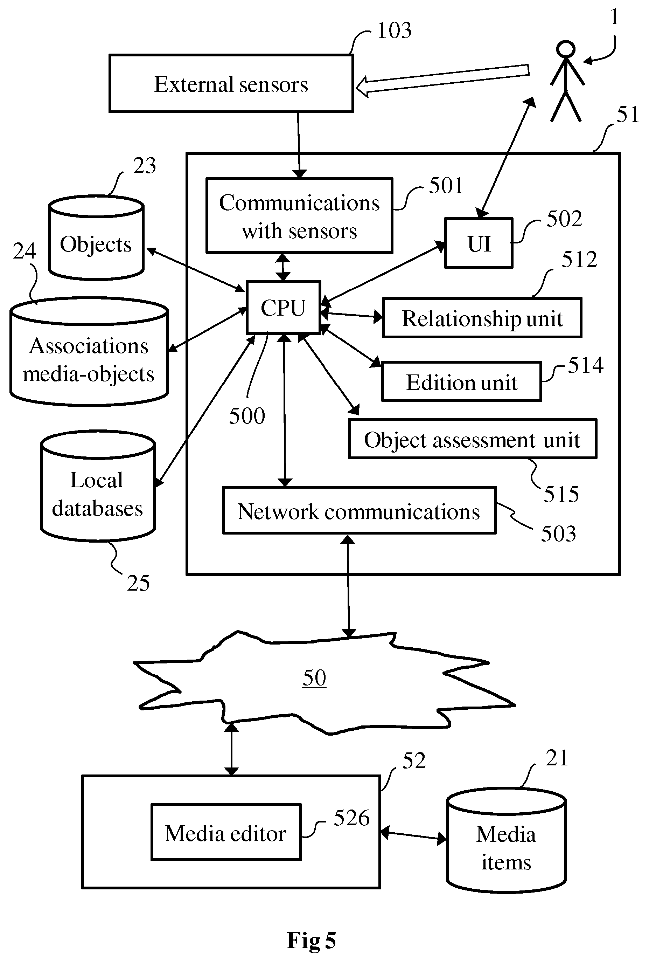

In a first example, illustrated on **Figure 5**, a personal device 51 includes part of the functionalities of the system 10 and communicates via a network 50 with a remote device 52 comprising complementary parts of the system 10. The remote device 52 gives the user 1 access to the media items 210 stored in the media database 21, for recording or retrieving data.

For example, the personal device 51 is a wearable apparatus, such as a smartphone, a smart watch, a laptop, a camera, a tablet, or any portable media or audio player. In another example, the personal device 51 is a fixed computer or an interactive TV set.

The remote device 52 is advantageously a server, dedicated to multiple personal devices in a wide area network (WAN). In other implementations, it corresponds to a gateway, which may be implemented e.g. in a local area network (LAN) or even a personal area network (PAN). In variant implementations, two or more remote devices are exploited jointly for the media storage management, instead of a single remote device.

The personal device 51 and remote device 52 can take any physical forms designed, configured and/or adapted for performing the mentioned functions and producing the mentioned effects or results. In some implementations, any of them is embodied as a set of apparatus or physical parts of apparatus, whether grouped in a same machine or in different, possibly remote, machines.

Also, the described functionalities can be implemented in hardware, software, firmware, or any mixed form thereof as well. They are preferably embodied within at least one processor of the personal device 51 and likewise for the remote device 52.

A processor refers here to a processing device in general, including, for example, a computer, a microprocessor, an integrated circuit, or a programmable logic device. Additionally, it may be implemented by instructions being performed by a processor, and such instructions (and/or data values produced by an implementation) may be stored on a processor-readable medium such as, e.g., an integrated circuit, a software carrier or other storage device such as, e.g., a hard disk, a CD, an optical disc, a RAM or a ROM. Instructions may form an application program tangibly embodied on a processor-readable medium. A processor may be characterized as, for example, both a device configured to carry out a process and a device that includes a processor-readable medium (such as a storage device) having instructions for carrying out a process. Further, a processor-readable medium may store, in addition to or in lieu of instructions, data values produced by an implementation.

The network 50 is advantageously a WAN or the Internet network. In other implementations, it consists in a LAN, such as for example a network dedicated to a company or a household. In still other embodiments, the network 50 is a PAN, the user 1 having preferably access to a large collection of media items 210 distributed among several local databases.

The personal device 51 is connected to the network 50 via wireless and/or wired communication modes. For example, it is connected to the network 50 via WiFi (for Wireless Fidelity), UMTS (for Universal Mobile Telecommunications System), LTE (for Long-Term Evolution), cable or infrared communications.

More precisely, the personal device 51 comprises one or more processors 500 such as a CPU (Computer Processing Unit), cooperating with a user interface 502 for interactions with the user 1, a unit 503 for network communications and a unit 501 for communications with external sensors 103. The latter correspond to part of the monitors 101 and of the detectors 102 described above for the system 10. For example, the communication units 501 and 503 are exploited for wireless communications and each of them includes an encoding/decoding part, a modem and an antenna.

The personal device 51 further comprises a relationship unit 512 in charge of the functions assigned to the relationship manager module 12 and to the appraisal assessor module 13, an edition unit 514 corresponding to the edition manager module 14, and an object assessment unit 515 corresponding to the object assessment module 15. It will be understood that the units 512, 513 and 514 can be part of the processor 500, but can also consist in memory units such as ROM dedicated to storing sets of instructions to be executed by the processor 500.

Also, the processor 500 covers the functions of the storage manager module 11. In addition, by contrast with the media database 21, the object database 23 and association database 24 are available locally to the user 1, together with one or more complementary databases 25 including notably the media management database 22.

The remote device 52 comprises notably a media editor unit 526, corresponding to the media editor module 16 - further to multiple not represented parts, including one or more processors. The media editor unit 526 can itself be part of such a processor.

As a whole, with the example of Fig. 5, the remote device 52 can notably consist in a usual media server, while specific functionalities are implemented in the personal device 51. In this respect, memory management improvements are achieved at the personal level, though accordingly passed on to a global level.

In particular, if a number of users are exploiting a similar system, the cumulated storage gains in collective media management can be quite significant. This is all the more true since in the present example, the databases for the objects 230 and associations 240 are kept on the user side.

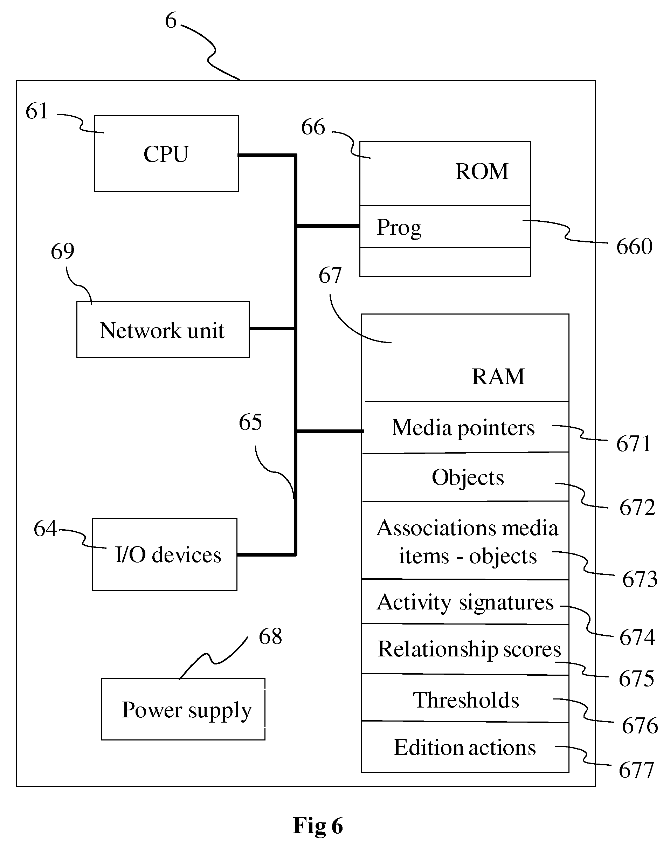

A particular apparatus 6, visible on **Figure 6****,** is embodying the personal device 501. It corresponds for example to a personal computer (PC), a laptop, a tablet or a smartphone. It comprises the following elements, connected to each other by a bus 65 of addresses and data that also transports a clock signal:
- a microprocessor 61 (or CPU) ;
- a non-volatile memory of ROM type 66, comprising a program for managing media items;
- a RAM 67;
- one or several I/O (Input/Output) devices 64 such as for example a keyboard, a mouse, a joystick, a webcam; other modes for introduction of commands such as for example vocal recognition are also possible;
- a power supply 68 ; and
- a network unit 69, such as a radiofrequency, cell network or cable communication unit.

According to a variant, the power supply 68 is external to the apparatus 6.

It is noted that the word "register" used in the description of memories 66 and 67 designates in each of those memories a memory zone of any size, which can cover low capacity (a few binary data) as well as large capacity (enabling to store a whole program or all or part of information representative of data calculated or to be displayed).

When switched-on, the microprocessor 61 loads and executes the instructions of a program contained in the register 660 of the ROM 66.

The random access memory 67 notably comprises:
- in a register 671, pointers to media items 210 contained in the media database 21,
- in a register 672, data on the objects 230;
- in a register 673, data on the associations 240;
- in a register 674, activity signatures;
- in a register 675, relationship scores;
- in a register 676, relationship thresholds;
- in a register 677, rules pertaining to edition actions.

According to a variant, the program for managing media items is stored in the RAM 67. This enables more flexibility, in particular when related functionalities are not embedded originally in apparatus 6.

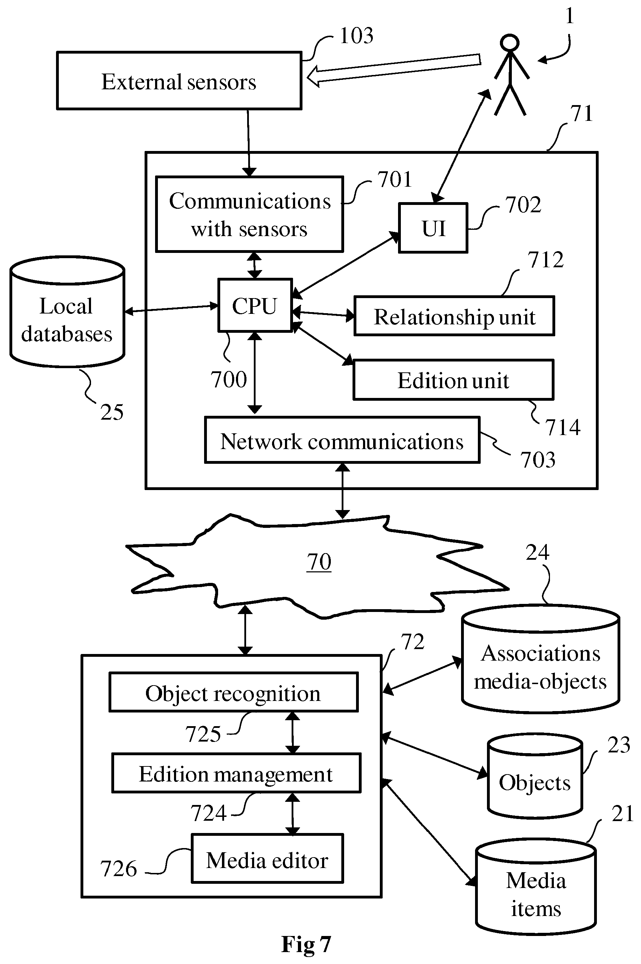

In a second example, represented on **Figure 7****,** a personal device 71 includes part of the functionalities of the system 10 and communicates via a network 70 with a remote device 72 comprising complementary parts of the system 10. The remote device 72 gives the user 1 access to the media items 210, objects 230 and associations 240, stored respectively in the media database 21, object database 23 and association database 24. In variant implementations, two or more remote devices are exploited jointly instead of a single remote device.

Like in the first example of Fig. 5, the personal device 71 comprises one or more processors 700, cooperating with a user interface 702 for interactions with the user 1, a unit 703 for network communications, a unit 701 for communications with external sensors 103, a relationship unit 712 and an edition unit 714, and has a direct access to one or more local databases 25. Since those features are similar to those described above for the first example, they will not be developed further.

Also, the remote device 72 includes a media editor unit 726, similar to the editor unit 526 of Fig. 5. However, by contrast with the previously described example, the remote device 72 further includes an edition management unit 724 corresponding to the edition manager module 14, and an object recognition unit 725 corresponding to the object assessment module 15.

Like for the first example, the units (whether in the personal device 71 or in the remote device 72) can notably be part of one or more processors or consist in memory units such as e.g. ROM, dedicated to storing sets of instructions to be executed by the processors.

More precisely, the edition management functions are shared between the personal device 71 (with the edition unit 714) and the remote device 72 (with the edition management unit 724), each of them being able to play an active role in the edition of media data as explained below.

The remote device 72 has a management access to the media database 21, object database 23 and association database 24, so that the user 1 needs to address that remote device 72 via the network 70 for storing, accessing and processing the media items 210. That remote device 72 is notably in charge of generating and processing the objects 230 and the associations 240 between the media items 210 and the objects 230. Those aspects are thus essentially transparent to the user 1.

The personal device 71 and remote device 72 are adapted to leave a control role to the user 1 over the media items 210. Namely, no media item 210 being personal to the user 1 can be added, modified or deleted without the user's information and approbation. Also, information about the generated objects 230 is communicated from the remote device 72 to the personal device 71, for sake of efficient consideration of the relationship between the user 1 and the considered objects 230, especially with respect to monitoring.

In a variant embodiment, the remote device 72 is entitled to delete fully or partly some of the media items 210 without the user's approval. This can leave more flexibility to a server for collective media management, at the cost of decreased hold of the users over their personal data. Such a solution can have some attractiveness e.g. in a group of people agreeing to share the storage management of personal pictures and videos and to incur some resulting personal losses in case of automatically identified decrease of personal interest in associated objects.

In another variant embodiment, the relationship management corresponding to the relationship manager module 12 is itself transferred to the remote device 72. In that case, the personal device 71 is configured for sending information on relationship events to the remote device 72 for analysis. Such events consist e.g. in exchanged emails or monitored information on the environment. The remote device 72 is accordingly configured for processing the information on those events as detailed above. Though entailing additional needs in network bandwidth and in processing capacities in the remote device 72, that embodiment can provide a high degree of flexibility to a server or any centralized system in the management of large quantities of personal media data.

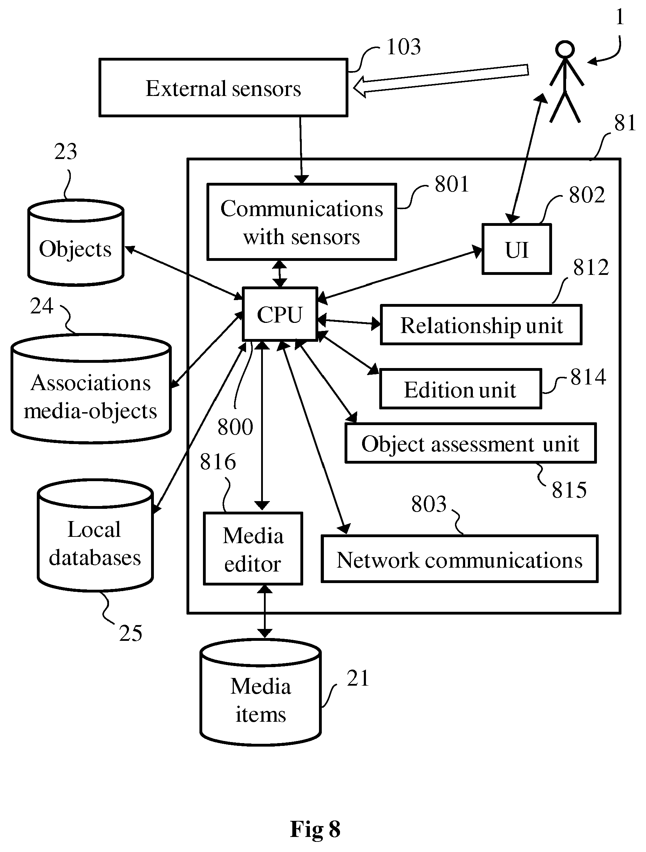

In a third example, represented on **Figure 8****,** a personal device 81 includes a large part of the functionalities of the system 10, and is configured for executing the steps of the above described process without requiring access to an external network.

Like for the first example of Fig. 5, the personal device 81 comprises one or more processors 800, cooperating with a user interface 802 for interactions with the user 1, a unit 803 for network communications, a unit 801 for communications with external sensors 103, a relationship unit 812, an edition unit 814 and an object assessment unit 815, and has a direct access to the object database 23, the association database 24 and one or more complementary local databases 25. Since those features are similar to those described above for the first example of Fig. 5, they will not be developed further.

In addition, the personal device 81 comprises a media editor unit 816 corresponding to the media editor module 16, which enables to access locally the media database 21.

In this embodiment, the user 1 has thus a full local control of all operations, and can efficiently manage a personal media collection.

In a variant implementation, the relationship unit 812, edition unit 814 and object assessment unit 815 are configured for proceeding with automatic operations over time, so as to maintain and update regularly the user's personal media database 21. Depending on the embodiments, any planned media editing can then optionally be submitted to the user 1 by the personal device 81 for validation.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of managing media items (210) having respective media contents embodying at least two objects (230), said media items being stored in at least one media database (21) upon instructions of at least one user (1), being accessible by said at least one user and only being accessible by other users under the control of said at least one user,
**characterized in that** said method comprises:
- receiving in at least one processor (11; 61; 500; 700; 800) at least one appraisal indicator associated with at least one of said objects, called a target object, said at least one appraisal indicator being representative of an appreciation by said at least one user (1) on said at least one target object;
- if said at least one appraisal indicator meets at least one deletion criterion, triggering, by said at least one processor, object deletion instructions related to said at least one target object, for deleting at least part of at least one of said media items, called a target media item, having said at least one target object present in the content of said at least one media item.

2. A method according to claim 1, **characterized in that** said object deletion instructions comprise deleting at least one of said target media items (210).

3. A method according to claim 1 or 2, **characterized in that** said object deletion instructions comprise removing said at least one target object (230) in at least one of said at least one target media item (210) associated with said at least one target object.

4. A method according to claim 3, **characterized in that** said object deletion instructions comprise replacing said at least one removed target object with another of said objects in at least one of said at least one target media item.

5. A method according to claim 3 or 4, **characterized in that** said object deletion instructions comprise replacing said at least one removed target object with replacement content in at least one considered media item among said at least one target media item, said replacement content being derived from a part complementary to said at least one target object in the content of said at least one considered media item.

6. A method according to any of the preceding claims, **characterized in that** said at least one appraisal indicator includes at least one score (675) and said at least one deletion criterion relies on at least one score threshold (676) corresponding to said at least one score.

7. A method according to any of the preceding claims, **characterized in that** said method comprises:
- deriving at least one of said at least one appraisal indicator from monitored physiological reactions of said at least one user (1) towards at least one of said objects (230).

8. A computer program for managing media items (210), said computer program comprising software code adapted to perform steps of a method in accordance with any of claims 1 to 7.

9. A device (100; 51; 6; 71; 81) for managing media items (210) having respective media contents embodying at least two objects (230), said media items being stored in at least one media database (21) upon instructions of at least one user (1), being accessible by said at least one user and only being accessible by other users under the control of said at least one user, **characterized in that** said device includes at least one processor (11; 61; 500; 700; 800) configured for:
- receiving at least one appraisal indicator associated with at least one of said objects, called a target object, said at least one appraisal indicator being representative of an appreciation by said at least one user (1) on said at least one target object;
- if said at least one appraisal indicator meets at least one deletion criterion, triggering object deletion instructions related to said at least one target object, for deleting at least part of at least one of said media items, called a target media item, having said at least one target object present in the content of said at least one media item.

10. A device (100; 51; 6; 71; 81) according to claim 9, **characterized in that** said object deletion instructions comprise deleting at least one of said at least one target media item.

11. A device (100; 51; 6; 71; 81) according to claim 9 or 10, **characterized in that** said object deletion instructions comprise removing said at least one target object in at least one of said at least one target media item associated with said at least one target object.

12. A device (100; 51; 6; 71; 81) according to claim 11, **characterized in that** said object deletion instructions comprise replacing said at least one removed target object with another of said objects in at least one of said at least one target media item.

13. A device (100; 51; 6; 71; 81) according to claim 11 or 12, **characterized in that** said object deletion instructions comprise replacing said at least one removed target object with replacement content in at least one considered media item among said at least one target media item, said replacement content being derived from a part complementary to said at least one target object in the content of said at least one considered media item.

14. A device (100; 51; 6; 71; 81) according to any of claims 9 to 13, **characterized in that** said at least one appraisal indicator includes at least one score (675) and said at least one deletion criterion relies on at least one score threshold (676) corresponding to said at least one score.

15. A device (100; 51; 6; 71; 81) according to any of claims 9 to 14, **characterized in that** said at least one processor is further configured for:
- deriving at least one of said at least one appraisal indicator from monitored physiological reactions of said at least one user (1) towards at least one of said objects (230).
